# EUROPEAN PATENT APPLICATION

(11) **EP 1 703 665 A1**
(43) Date of publication of application: **20.09.2006**
(21) Application number: 04807197.1
(22) Date of filing: 16.12.2004
(51) Int. Cl.: H04L 12/24, H04B 7/26

(54) **COMMUNICATION SYSTEM, COMMUNICATION METHOD, NETWORK LOAD PREDICTION NODE, AND NETWORK CONFIGURATION MANAGEMENT NODE**

(30) Priority: 16.12.2003 JP 2003418528
(71) Applicant: NTT DoCoMo, Inc., Tokyo 100-6150 (JP)
(72) Inventor: AKINAGA, Yoshikazu., c/o IP Dep. NTT DoCoMo,Inc, Chiyoda-ku Tokyo 100-6150 (JP); ISHII, Kenji., c/o IP.Dep. NTT DoCoMo, Inc., Chiyoda-ku Tokyo 100-6150 (JP); KANEDA, Shigeru., c/o IP.Dep. NTT DoCoMo, Inc., Chiyoda-ku Tokyo 100-6150 (JP)
(74) Representative: HOFFMANN EITLE
(86) International application number: PCT/JP2004/018839
(87) International publication number: WO 2005/060161

(57) **Abstract**

In a communication system, a plurality of user terminals located in a plurality of service areas perform communications. The communication system includes a mobility control node configured to manage a service area where each user terminal is located; a session control node configured to manage a communication history of a communication performed by each user terminal; and a network load prediction node configured to acquire user information of the user terminal located in each service area and the communication history of each user terminal at predetermined timing, and to calculate a communication demand prediction in each service area based on the user information and the communication history.

## Description

### BACKGROUND OF THE INVENTION

### 1. Field of the Invention

The present invention relates to a communication system and a communication method, in which a plurality of user terminals located in a plurality of service areas perform communications, and to a network load prediction node and a network configuration management node, which are suitable for use in these communication system and method.

### 2. Description of the Related Art

In a conventional communication system, fixed allocation and operation of a network facility for a predetermined service area have been performed according to the maximum capacity of the network facility.

Here, in the network facility, an access apparatus including a radio network controller, a base station and the like, a transfer node, a service control node, a mobility control node, a transmission apparatus, an exchange including a router, a switch and the like, and the like are included.

Moreover, the service area is a management area to be managed by the access apparatus. The service area may be an area where a service can be provided by a wireless link, or an area where the service can be provided by a wired link.

For example, an area (cell) to be covered by individual base stations in a mobile communication system, an area geographically divided arbitrarily by a communication carrier, an area in a network having a specific purpose such as a data center, and the like apply to the service area.

Specifically, a design is made such that the same network facility always provides a communication service to a specific service area.

Moreover, in the specific service area, the communication system is operated by regulation control and the like such that call processing, packet processing and service control processing are performed within a range of a processing capacity of the network facility.

Furthermore, in the conventional communication system, traffic information relating to traffic volume, a service control status and the like are recorded in each network facility, and based on such traffic information, facility planning is made for setting up and expansion of the network facility.

However, in the conventional communication system, in most cases, the above-described facility planning is made with a certain amount of margin for a demand for the network facility, which can be predicted for a long term (a half year to several years) . According to such facility planning, the setting up and expansion of the network facility are performed.

In this case, a prediction of such a long-term demand for the network facility is performed in such a manner that the traffic information is acquired for more than several months, the traffic information concerned is analyzed, and a balance between the demand and supply of the network facility is supposed. Hence, such work requires an extremely long time, and is complicated.

Moreover, in the conventional communication system, particularly in the case where the service area is a wireless area, the traffic volume in each service area varies owing to a movement of each user who carries a user terminal and a movement of each user terminal itself.

Specifically, in the specific service area, even if the balance between the demand and supply of the network facility is supposed, such a supposition is merely a prediction of the demand for the network facility based on the user terminals which happen to be located in the specific service area, and there is a problem in that it is difficult to increase accuracy of the prediction of the demand for the network facility relating to the specific service area.

Moreover, in the conventional communication system, the network facility is located semi-fixedly for the specific service area.

Accordingly, in the case where the prediction of the demand for the network facility fails, there is a problem in that it is difficult to increase utilization efficiency of the network facility unless the network facility is attempted to be reused by a physical movement of the network facility, a change of setting of the network facility by a person in charge of maintenance, and the like.

### BRIEF SUMMARY OF THE INVENTION

In viewing of the foregoing, it is an object of the present invention to provide, a communication system and a communication method, which are capable of increasing the utilization efficiency of the network facility by efficiently calculating a highly accurate prediction of the demand for the network facility, and to provide a network load prediction node and a network configuration management node, which are suitable for use in these communication system and method.

A first aspect of the present invention is summarized as a communication system in which a plurality of user terminals located in a plurality of service areas perform communications. The communication system includes a mobility control node configured to manage a service area where each user terminal is located; a session control node configured to manage a communication history of a communication performed by each user terminal; and a network load prediction node configured to acquire user information of the user terminal located in each service area and the communication history of each user terminal at predetermined timing, and to calculate a communication demand prediction in each service area based on the user information and the communication history.

In the first aspect, the communication system can further include a network configuration management node configured to control a logical path between an access apparatus and a service control node based on the communication demand prediction acquired from the network load prediction node. The access apparatus may be capable of communicating with a user terminal in a predetermined service area, and the service control node may provide a predetermined service to the user terminal through the access apparatus.

In the first aspect the communication system further includes a user distribution database configured to manage user information of a user terminal in a communication state and user information of a user terminal in a non-communication state for each service area based on management information in the mobility control node. The network load prediction node may be configured to acquire the user information of the user terminal located in each service area from the user distribution database at predetermined timing.

A second aspect of the present invention is summarized as a network load prediction node for use in a communication system in which a plurality of user terminals located in a plurality of service areas perform communications. The network load prediction node includes an acquirer configured to acquire user information of the user terminal located in each service area and a communication history of a communication performed by each user terminal at predetermined timing; and a calculator configured to calculate a communication demand prediction in each service area based on the user information and the communication history.

In the second aspect, the communication history can includes identification information of a sender user terminal, identification information of a receiver user terminal, a communication start time, a communication end time, location information of the sender user terminal at the communication start time, location information of the sender at the communication end time, location information of the receiver user terminal at the communication start time, location information of the receiver user terminal at the communication end time, traffic volume and a type of the communication.

A third aspect of the present invention is summarized as a network configuration management node for use in a communication system in which a plurality of user terminals located in a plurality of service areas perform communications. The network load prediction node includes a controller configured to control a logical path between an access apparatus and a service control node based on a communication demand prediction calculated based on user information of a user terminal located in each service area and a communication history of a communication performed by each user terminal. The access apparatus may be capable of communicating with a user terminal in a predetermined service area, and the service control node may provide a predetermined service to the user terminal through the access apparatus.

A third aspect of the present invention is summarized as a communication method in which a plurality of user terminals located in a plurality of service areas perform communications. The communication method includes managing, in a mobility control node, a service area where each user terminal is located; managing, in a session control node, a communication history of a communication performed by each user terminal; acquiring, in a network load prediction node, user information of the user terminal located in each service area and the communication history of each user terminal at predetermined timing; and calculating, in the network load prediction node, a communication demand prediction in each service area based on the user information and the communication history.

### BRIEF DESCRIPTION OF THE SEVERAL VIEWS OF THE DRAWINGS

FIG. 1 is an entire configuration view of a communication system according to an embodiment of the present invention.
FIG. 2A is a functional block diagram of a network configuration management node of the communication system according to the embodiment of the present invention.
FIG. 2B is a diagram for explaining operations of a path configuration controlling unit of the network configuration management node of the communication system according to the embodiment of the present invention.
FIG. 2C is a diagram for explaining operations of a path configuration controlling unit of the network configuration management node of the communication system according to the embodiment of the present invention.
FIG. 2D is a diagram for explaining operations of a path configuration controlling unit of the network configuration management node of the communication system according to the embodiment of the present invention.
FIG. 2E is a diagram for explaining operations of a path configuration controlling unit of the network configuration management node of the communication system according to the embodiment of the present invention.
FIG. 3 is a functional block diagram of a service control node of the communication system according to the embodiment of the present invention.
FIG. 4 is a functional block diagram of an access apparatus of the communication system according to the embodiment of the present invention.
FIG. 5 is a functional block diagram of a transfer node of the communication system according to the embodiment of the present invention.
FIG. 6 is a functional block diagram of a mobility control node of the communication system according to the embodiment of the present invention.
FIG. 7 is a functional block diagram of a user distribution database of the communication system according to the embodiment of the present invention.
FIG. 8 is a functional block diagram of a session control node of the communication system according to the embodiment of the present invention.
FIG. 9 is a functional block diagram of a user communication tendency database of the communication system according to the embodiment of the present invention.
FIG. 10 is a functional block diagram of a network load prediction node of the communication system according to the embodiment of the present invention.
FIG. 11 is a sequence diagram showing operations of updating the user distribution database in the communication system according to the embodiment of the present invention.
FIG. 12 is a sequence diagram showing operations of updating the user communication tendency database in the communication system according to the embodiment of the present invention.
FIG. 13 is a sequence diagram showing operations of changing a logical path in the communication system according to the embodiment of the present invention.

### DETAILED DESCRIPTION OF THE INVENTION

### (Configuration of Communication System According to One Embodiment of the Present Invention)

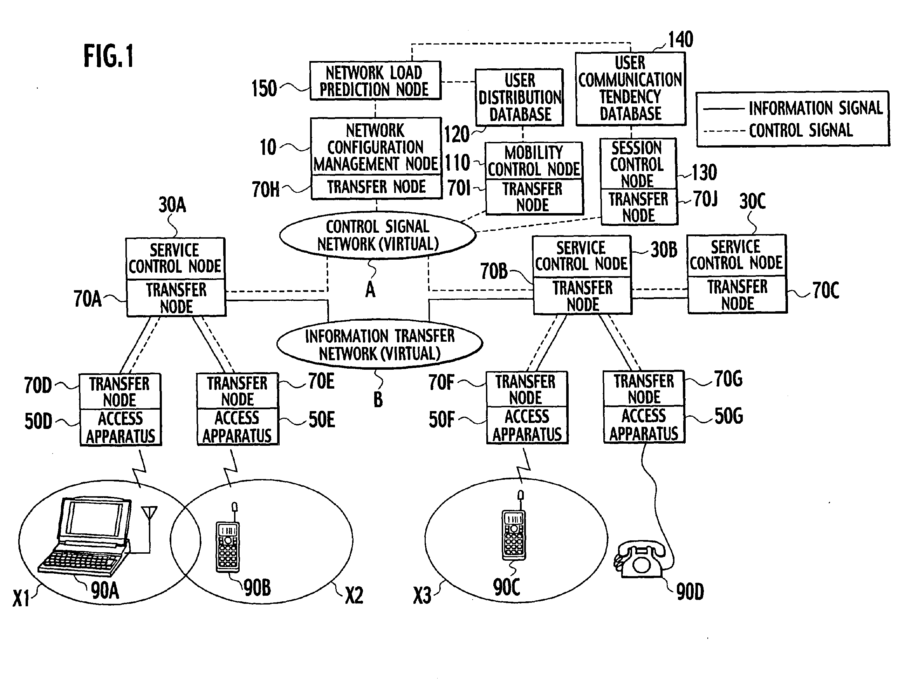

Referring to FIGS. 1 to 10, a configuration of a communication system in an embodiment of the present invention will be described.

As shown in FIG. 1, the communication system according to this embodiment includes a network configuration management node 10, a plurality of service control nodes 30A to 30C, a plurality of access apparatuses 50D to 50G, a plurality of transfer nodes 70A to 70J, a plurality of user terminals 90A to 90D, a mobility control node 110, a user distribution database 120, a session control node 130, a user communication tendency database 140, and a network load prediction node 150.

The plurality of service control nodes 30A to 30C, the plurality of access apparatuses 50D to 50G, the network configuration management node 10, the mobility control node 110 and the session control node 130 are connected to one another by the transfer nodes 70A to 70J through a virtual control signal network "A" and a virtual information transfer network "B".

Note that it is possible to freely configure logical paths on links among the transfer nodes 70. In this connection, though the control signal network "A" and the information transfer network "B" are distinguished from each other in FIG. 1, both of them may be physically separated from each other, or do not have to be physically separated from each other.

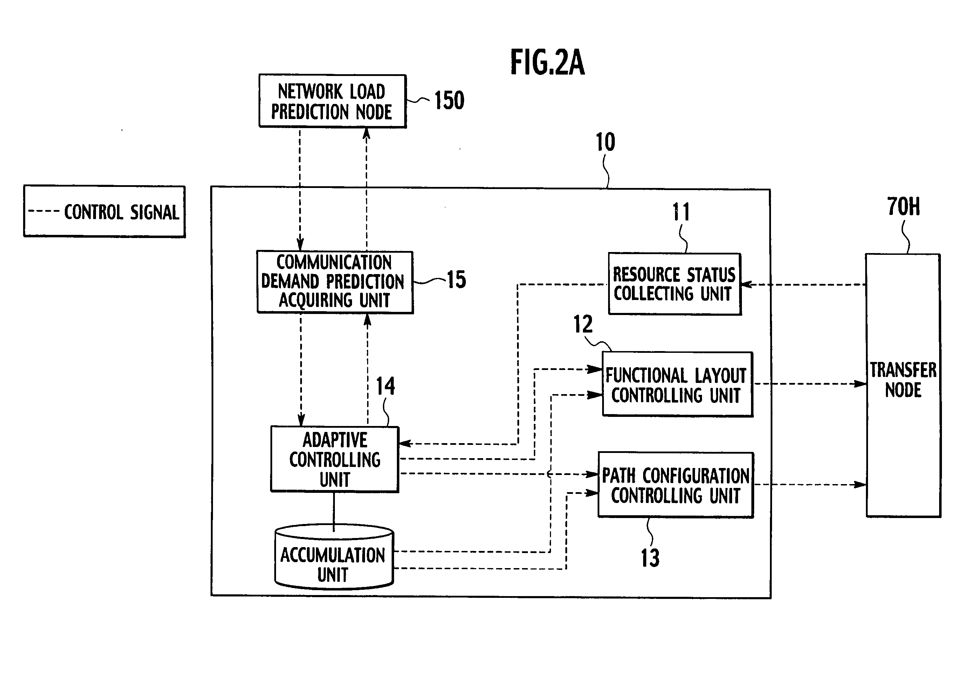

Referring to FIGS. 2A to 2E, a configuration of the network configuration management node 10 will be described. The network configuration management node 10 is configured to manage a configuration of a network including the plurality of service control nodes 30A to 30C, the plurality of access apparatuses 50D to 50G, the plurality of transfer nodes 70A to 70J, the mobility control node 110, and the session control node 130.

Specifically, the network configuration management node 10 is configured to determine control relationships among the service control nodes 30, the mobility control node 110, the session control node 130 and the access apparatuses 50, and to control the logical paths connecting the service control nodes 30, the mobility control node 110, the session control node 130 and the access apparatuses 50 to one another based on a communication demand prediction (to be described later) acquired from the network load prediction node 150.

As shown in FIG. 2A, the network configuration management node 10 includes a resource status collecting unit 11, a functional layout controlling unit 12, a path configuration controlling unit 13, an adaptive controlling unit 14, a communication demand prediction acquiring unit 15 and an accumulating unit 16.

The resource status collecting unit 11 is configured to collect resource statuses of the respective service control nodes 30, the respective access apparatuses 50, the mobility control node 110 and the session control node 130, and resource statuses of the links in the control signal network "A" and the information transfer network "B", through the transfer nodes 70H. Here, the resource statuses include a load status, a failure status, and the like.

Moreover, the resource status collecting unit 11 may also be configured to receive setting results (to be described later) in the respective service control nodes 30 and the respective access apparatuses 50.

The functional layout controlling unit 12 is configured to transmit control signals for realizing information transfer processing by the access apparatuses 50 through the transfer nodes 70H to the respective access apparatuses 50 based on information collected from an accumulating unit 16 according to an instruction from the adaptive controlling unit 14.

Note that such control information includes information relating to a control relationship indicating to which service control node 30 the access apparatus 50 is to belong.

Moreover, the functional layout controlling unit 12 is configured to determine functions to be arranged for the respective service control nodes 30, and to transfer control signals (service definitions including programs and data) for realizing the functions through the transfer nodes 70H to the respective service control nodes 30 based on information collected from the accumulating unit 16 according to an instruction from the adaptive controlling unit 14.

The path configuration controlling unit 13 is configured to perform a setting operation and a changing operation for the logical paths among the respective transfer nodes 70 based on information collected from the accumulating unit 16 according to an instruction from the adaptive controlling unit 14.

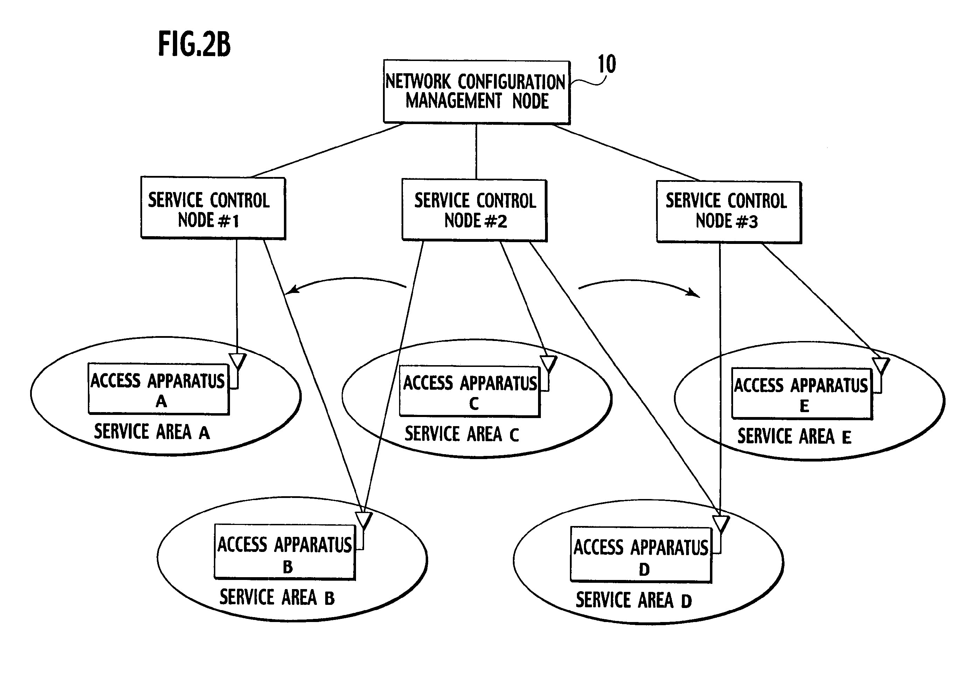

Referring to FIG. 2B, an example of the setting operation and the changing operation for the logical paths will be explained.

In the example of FIG. 2B, it is assumed that the service control node #1 manages the service area "A", the service control node #2 manages the service area "B", "C" and "D", the service control node #3 manages the service area "E".

When the network load prediction node 150 calculates a communication demand prediction showing that traffic volume in the service area "C" temporally increases, based on information showing there will be fireworks displays in the service area "C", after-mentioned abnormality information relating to circumstances of other service areas, the number of user terminals located in the service area "C", the path configuration controlling unit 13 deletes a logical path between the access apparatus "B" and the service control node #2, sets a logical path between the access apparatus "B" and the service control node #1, deletes a logical path between the access apparatus "D" and the service control node #2, and sets a logical path between the access apparatus "D" and the service control node #3, in order to make the service control node #1 to manage the service area "B" and make the service control node #3 to manage the service area "D".

As a result, it is possible to reduce the load of the service control node #2 which manages the service area "B", "C" and "D".

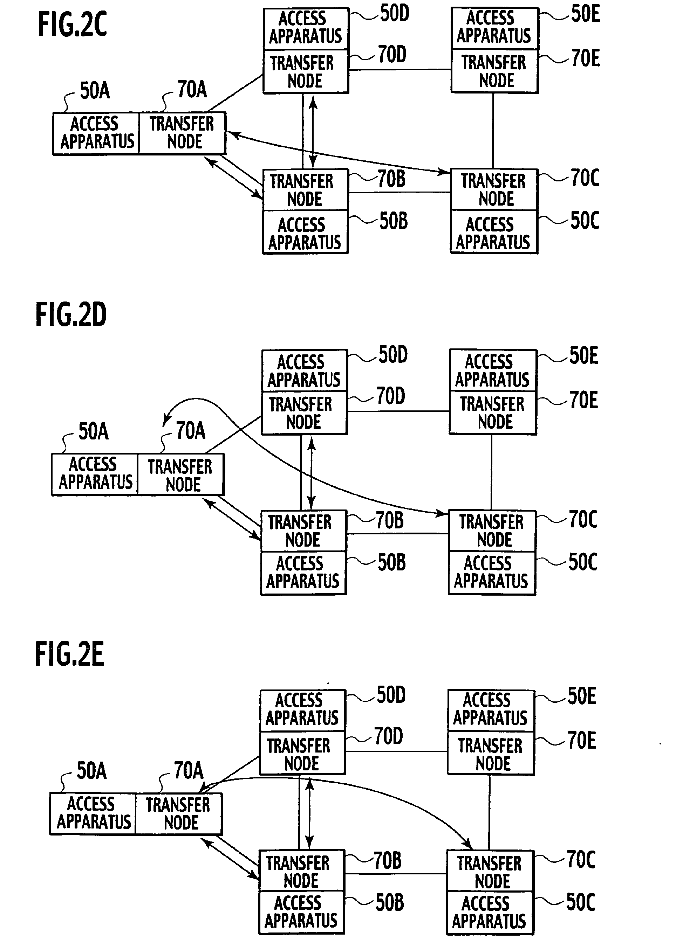

Referring to FIGS. 2C to 2E, examples of the setting operation and the changing operation for the logical paths will be explained.

In FIG. 2C, it is assumed that a logical path is set between the access apparatus 50A and the access apparatus 50B, a logical path is set between the access apparatus 50A and the access apparatus 50C, and a logical path is set between the access apparatus 50B and the access apparatus 50D.

In FIG. 2D, when the network load prediction node 150 calculates a communication demand prediction showing that traffic volume in the logical path between the access apparatus 50A and the access apparatus 50B increases, the path configuration controlling unit 13 changes the logical path between the access apparatus 50A and the access apparatus 50C from a route of "the access apparatus 50A - the access apparatus 50B - the access apparatus 50C" to a route of "the access apparatus 50A - the access apparatus 50D - the access apparatus 50B - the access apparatus 50C".

In FIG. 2E, when the network load prediction node 150 calculates a communication demand prediction showing that traffic volume in the logical path between the access apparatus 50B and the access apparatus 50D increases, the path configuration controlling unit 13 changes the logical path between the access apparatus 50A and the access apparatus 50C from a route of "the access apparatus 50A - the access apparatus 50D - the access apparatus 50B - the access apparatus 50C" to a route of "the access apparatus 50A - the access apparatus 50D - the access apparatus 50E - the access apparatus 50C".

The adaptive controlling unit 14 is configured to determine whether or not a current network configuration (the functional layout of the nodes and the apparatuses, and the configuration of the logical paths) satisfies predetermined conditions by monitoring a network status and a network control state, which are accumulated in the accumulating unit 16, and to activate a scenario for the adaptive control when the current network configuration is determined to satisfy the predetermined conditions.

Moreover, the adaptive controlling unit 14 may also be configured to activate the scenario for the adaptive control, in the case of receiving the after-mentioned communication demand prediction from the network load prediction node 150.

The adaptive controlling unit 14 is configured to change the current network configuration (the functional layout of the nodes and the apparatuses, and the configuration of the logical paths), by issuing predetermined instructions to the functional layout controlling unit 12 and the path configuration controlling unit 13, in accordance with the activated scenario for the adaptive control.

For example, for the purpose of controlling the configurations of the logical paths among the respective nodes and the functional layout of the respective service control nodes 30 and the access apparatuses 50, the adaptive controlling unit 14 is configured to issue the instructions to the functional layout controlling unit 12 and the path configuration controlling unit 13 based on the communication demand prediction (to be described later) acquired from the network load prediction node 150 and on the current network configuration, so as to enable communication of the user terminals 90 supposed to be located in the respective service areas.

The adaptive controlling unit 14 may also be configured to issue, after creating the configurations of the logical paths, the predetermined instructions to the functional layout controlling unit 12 and the path configuration controlling unit 13, based on a result of mapping the configurations of the logical paths into physical circuits (links) in the actual network.

Note that the adaptive controlling unit 14 may also be configured to control, as control of the functional layout of each access apparatus 50, a shape (a magnitude of transmission power and a direction of an antenna) of the service area (cell) coverable by the access apparatus 50.

The communication demand prediction acquiring unit 15 is configured to acquire the communication demand prediction from the network load prediction node 150.

The accumulating unit 16 is configured to accumulate the information relating to the current network configuration and the information relating to the resource statuses.

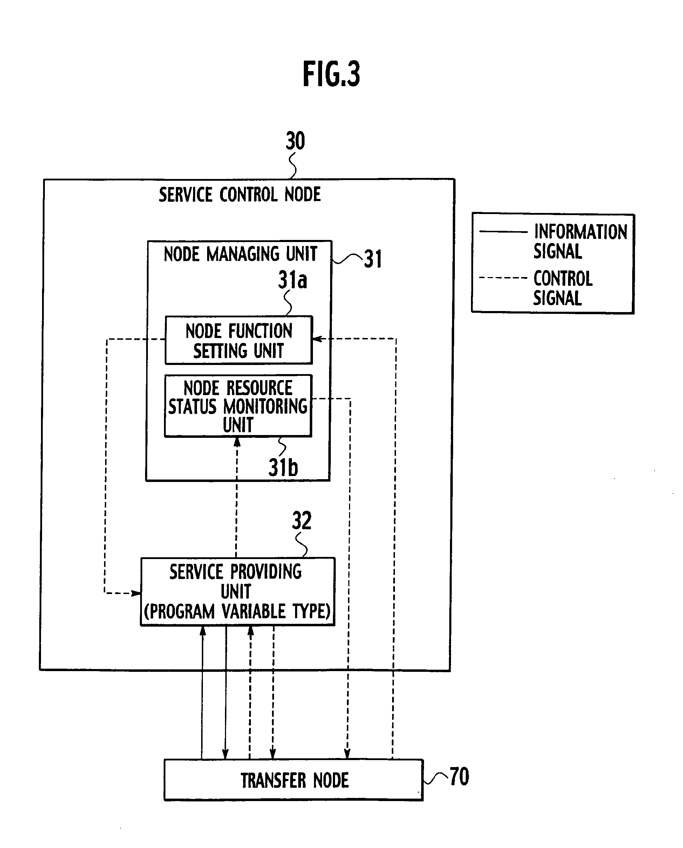

Referring to FIG. 3, a configuration of each service control node 30 will be described. The service control node 30 is configured to provide a predetermined service to the user terminal 90 which has transmitted a service request through the access apparatus 50.

As shown in FIG. 3, the service control node 30 includes a node managing unit 31, and a service providing unit 32. The node managing unit 31 includes a node function setting unit 31a, and a node resource status monitoring unit 31b.

The node function setting unit 31a is configured to set a functional program for providing the above-described predetermined service to the user terminal 90 based on the control signal (the service definition including the program and the data) transmitted from the transfer node 70 through the network configuration management node 10.

Moreover, the node function setting unit 31a is configured to manage types of services which can be provided in the service providing unit 32 in a collective way.

Note that such types of services are variable, and a configuration is adopted such that only control signals (the service definitions including the programs and the data) for the services which can be provided in the service providing unit 32 are transmitted from the network configuration management node 10 to the service control node 30.

Furthermore, the node function setting unit 31a is configured to report a result of setting the function in the service providing unit 32 to the network configuration management node 10 through the transfer node 70.

The node resource status monitoring unit 31b is configured to monitor the resource status of the service control node 30, and to report the resource status to the network configuration management node 10 through the transfer node 70.

The service providing unit 32 is configured to provide the predetermined service in response to the service request from the user terminal 90. Specifically, the service providing unit 32 can provide the predetermined service by executing the functional program set by the node function setting unit 31a.

For example, the service providing unit 32 can perform authentication processing for the user terminal 90 in response to the service request transferred from the access apparatus 50, and can transmit a result of the authentication processing to the access apparatus 50.

Moreover, the service providing unit 32 can shift provision processing of the predetermined service to another service control node 30 in response to an instruction from the network configuration management node 10.

Note that the service providing unit 32 includes a hardware configuration which can execute the above-described functional program, and can provide the predetermined service by executing the functional program set based on the control signals (the service definitions including the programs and the data) received from the other service control node 30 and the network configuration management node 10.

As a result of this, it is not necessary to provide a device dedicated to each of service contents, in the service control node 30,

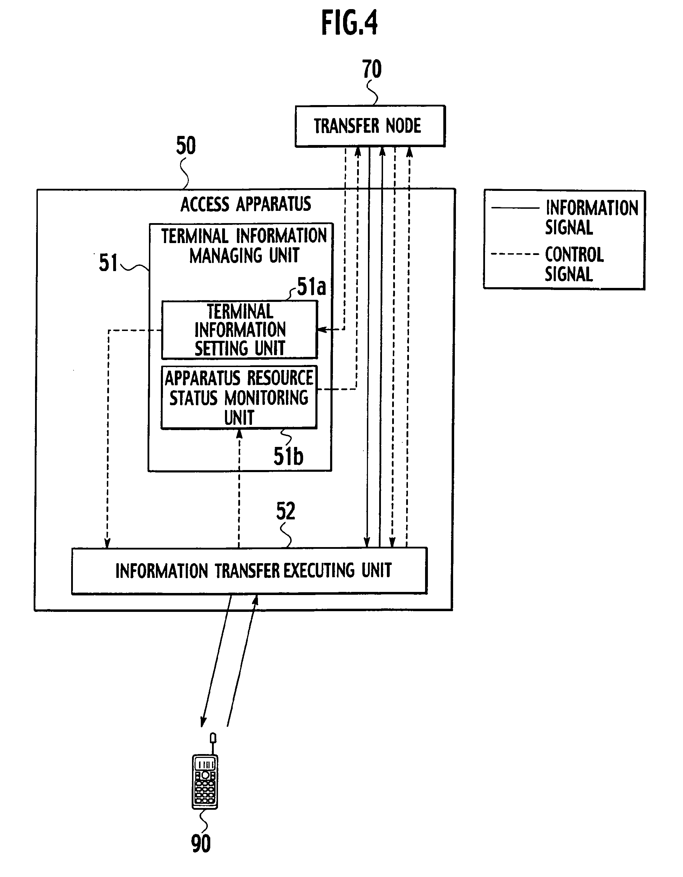

Referring to FIG. 4, a configuration of each access apparatus 50 will be described. The access apparatus 50 is connected to the user terminal 90 through a wired or wireless link, and connected to the service control node 30 through a logical path.

As shown in FIG. 4, the access apparatus 50 includes a terminal information managing unit 51, and an information transfer executing unit 52. The terminal information managing unit 51 includes a terminal information setting unit 51a, and an apparatus resource status monitoring unit 51b.

The terminal information setting unit 51a is one which sets information for executing information transfer processing by the information transfer executing unit 52 in response to the control signal transmitted from the network configuration management node 10 through the transfer node 70.

Moreover, the terminal information setting unit 51a is configured to report a result of setting the information in the access apparatus 50, to the network configuration management node 10 through the transfer node 70.

The apparatus resource status monitoring unit 51b is configured to monitor the resource status of the access apparatus 50, and to report the resource status to the network configuration management node 10 through the transfer node 70.

Specifically, the apparatus resource status monitoring unit 51b can monitor a link usage rate (a wireless resource usage rate and a wired resource usage rate) by monitoring a loaded state of the information transfer executing unit 52.

The information transfer executing unit 52 is configured to transfer information from the user terminal 90 to a predetermined service control node 30, based on the information set by the terminal information setting unit 51a.

Specifically, the information transfer executing unit 52 can be set so as to transfer predetermined information among the information from the user terminal 90 to the service control node 30 without performing the authentication processing therefor, and to determine whether or not the other information is to be transferred to the service control node 30 based on a result of the authentication processing.

For example, the information transfer executing unit 52 may also be configured to transfer a request for the service (the predetermined information) from the user terminal 90 to the predetermined service control node 30 through the transfer node 70 without performing the authentication processing therefor, and to determine whether or not user data (the other information) from the user terminal 90 is to be transferred to the predetermined service control node 30 through the transfer node 70 in response to the result of the authentication processing from the predetermined service control node 30.

Note that the information transfer executing unit 52 may also be configured to perform the authentication processing for the user terminal 90 based on a MAC address, an IP address and the like of the user terminal 90, and to change a method of the information transfer processing for each user terminal 90.

The information transfer executing unit 52 is configured to transfer, to a predetermined mobility control node 110, location information acquired from the user terminal 90.

Moreover, the access apparatus 50 may also be composed of a transportable access apparatus immediately incorporable in a network when a link resource (a wireless resource and a wired resource) is deficient, or of an apparatus peripheral to the transportable access apparatus.

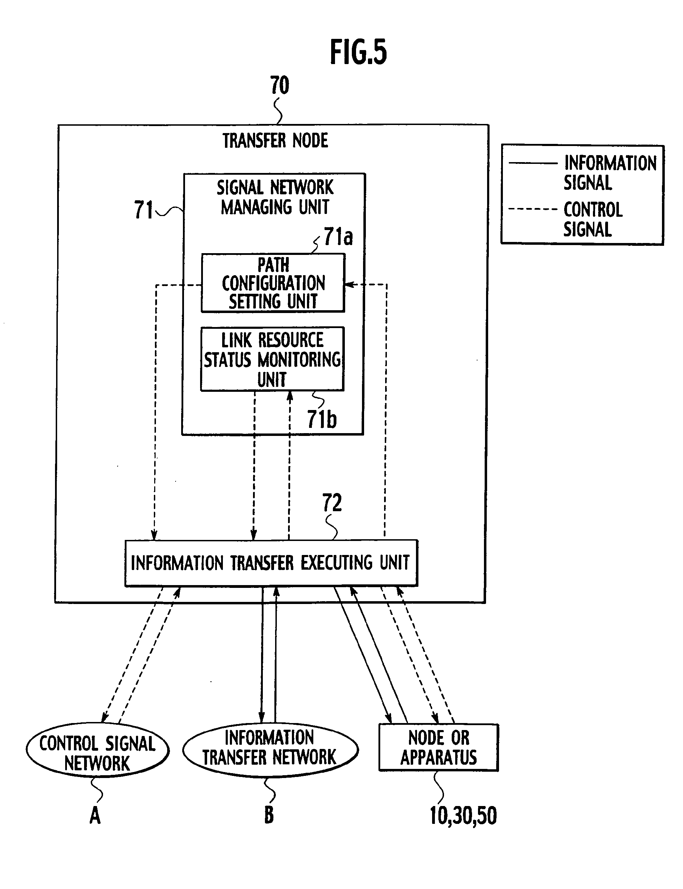

Referring to FIG. 5, a configuration of each transfer node 70 will be described. The transfer node 70 is an apparatus for configuring a network (the control signal network "A" and the information transfer network "B") which connects the network configuration management node 10, the plurality of service control nodes 30, the plurality of access apparatuses 50, the mobility control node 110 and the session control node 130 to one another.

As shown in FIG. 5, the transfer node 70 includes a signal network managing unit 71, and an information transfer executing unit 72. The signal network managing unit 71 includes a path configuration setting unit 71a, and a link resource status monitoring unit 71b.

The path configuration setting unit 71a is configured to allow the information transfer executing unit 72 to set and change the logical path, in response to an instruction from the network configuration management node 10 through the control signal network "A".

Moreover, the path configuration setting unit 71a is configured to report a result of setting and changing the logical path in the transfer node 70, to the network configuration management node 10 through the information transfer executing unit 72 and the control signal network "A".

The link resource status monitoring unit 71b is configured to monitor a link resource status in the transfer node 70, and to report the link resource status to the network configuration management node 10 through the information transfer executing unit 72 and the control signal network "A".

The information transfer executing unit 72 is configured to execute the information transfer processing between the node or the apparatus 10, 30, 50, 110 or 130 to which the transfer node 70 is connected, and the control signal network "A" or the information transfer network "B".

Specifically, the information transfer executing unit 72 connected to a specific transfer node 70 is configured to set and release the logical path on a link provided between the transfer node 70 and an information transfer executing unit 72 connected to the other transfer node, according to an instruction from the path configuration setting unit 71a.

Here, information is terminated after being transferred on a designated logical path among the logical paths set over the network.

Note that, even if the logical path is set between the same kind of transfer nodes 70, the logical path is identified as different logical paths depending on the purposes thereof.

Examples of the logical path include Virtual Connection (VC)/Virtual Path (VP) in the technology of Asynchronous Transfer Mode (ATM), a label switch path realized by the MPLS technology and the GMPLS technology, and a **□** path in the DWDM technology, a logical path which can logically specify a physical path such as optical path itself.

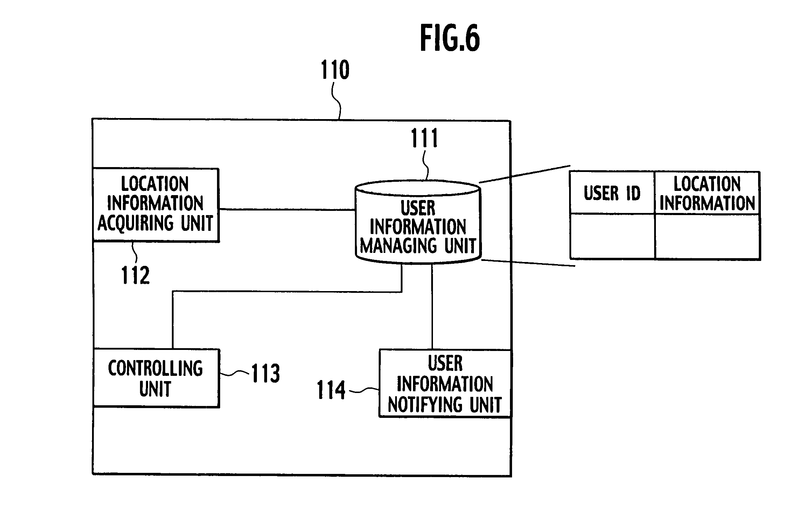

Referring to FIG. 6, a configuration of the mobility control node 110 will be described. The mobility control node 110 is configured to control the communication of the user terminal 90 through each access apparatus 50.

For example, the mobility control node 110 applies to a home location register (HLR) in the mobile communication system, a home agent (HA) in a mobile IP system, an SIP server in an IP telephone system, and the like.

As shown in FIG. 6, the mobility control node 110 includes a user information managing unit 111, a location information acquiring unit 112, a controlling unit 113, and a user information notifying unit 114.

The user information managing unit 111 is configured to manage a service area where each user terminal is located.

Specifically, the user information managing unit 111 is configured to manage user information in which a "user ID" for uniquely identifying the user terminal 90 and the "location information" indicating the service area where the user terminal 90 is located are associated with each other.

In other words, the user information managing unit 111 is a database configured to be capable of searching the location information of the user terminal with the user ID taken as a key, for the purpose of accelerating the search.

Moreover, the user information managing unit 111 may be configured to manage not only user information of a user terminal in a communication state but also user information of a user terminal in a non-communication state.

The location information acquiring unit 112 is configured to acquire the "location information" indicating the service area where each user terminal 90 is located, through the access apparatus 50 to which the user terminal 90 is connected.

For example, the location information acquiring unit 112 may acquire the "location information", by using information registered to the HLR, information registered to the HA, or information registered to the SIP server.

The location information acquiring unit 112 may acquire self-positioning location information (latitude / longitude, ID for showing location and so on) by a self-positioning technique such as GPS in the user terminal 90 actively or passively, and may determine location information calculated based on the acquired self-positioning location information as the above-mentioned location information.

The controlling unit 113 is configured to control for enabling the communication by the user terminal 90, based on the user information managed in the user information managing unit 111.

The user information notifying unit 114 is configured to notify the user information in the user information managing unit 111, to the user distribution database 120.

For example, the user information notifying unit 114 may be configured to notify the user information periodically, to notify the user information with a movement of the user terminal 90 taken as a trigger, or to notify the user information in response to a request from the user distribution database 120.

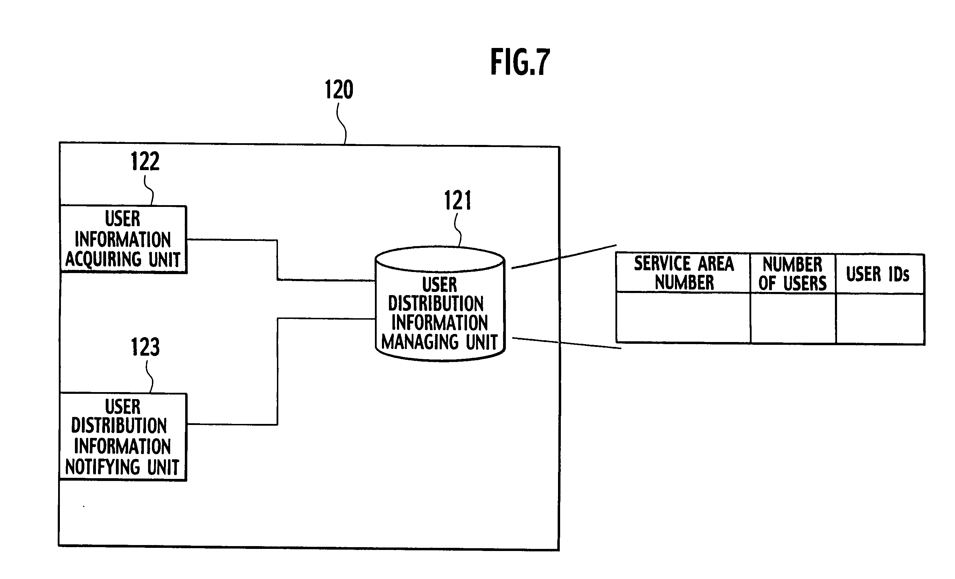

Referring to FIG. 7, a configuration of the user distribution database 120 will be described.

The user distribution database 120 is configured to manage, for each service area, the user information of the user terminal 90 in the communication state, in accordance with information managed by the mobility control node 110.

In addition, the user distribution database 120 may be configured to manage, for each service area, the user information of the user terminal 90 in the non-communication state in addition to the user information of the user terminal 90 in the communication state, in accordance with information managed by the mobility control node 110.

As shown in FIG. 7, the user distribution database 120 includes a user distribution information managing unit 121, a user information acquiring unit 122, and a user distribution information notifying unit 123.

The user distribution information managing unit 121 is configured to manage user distribution information in which a "service area number" identifying the service area as the location information of the user terminal 90, a "number of users" indicating the number of user terminals 90 located in the service area, and the plurality of "user IDs" identifying all the user terminals 90 located in the service area are associated with one another.

Specifically, the user distribution information managing unit 121 is a database configured to be capable of searching the number of users and the user IDs with the service area number taken as a key, for the purpose of accelerating the search.

The user information acquiring unit 122 is configured to acquire the user information (the number of users and the user IDs) for each service area, by transmitting a request for the user information to the mobility control node 110 at predetermined timing.

The user distribution information notifying unit 123 is configured to notify the user distribution information in the user distribution information managing unit 121, to the network load prediction node 150.

For example, the user distribution information notifying unit 123 may be configured to notify the user distribution information periodically, or to notify the user distribution information in response to a request from the network load prediction node 150.

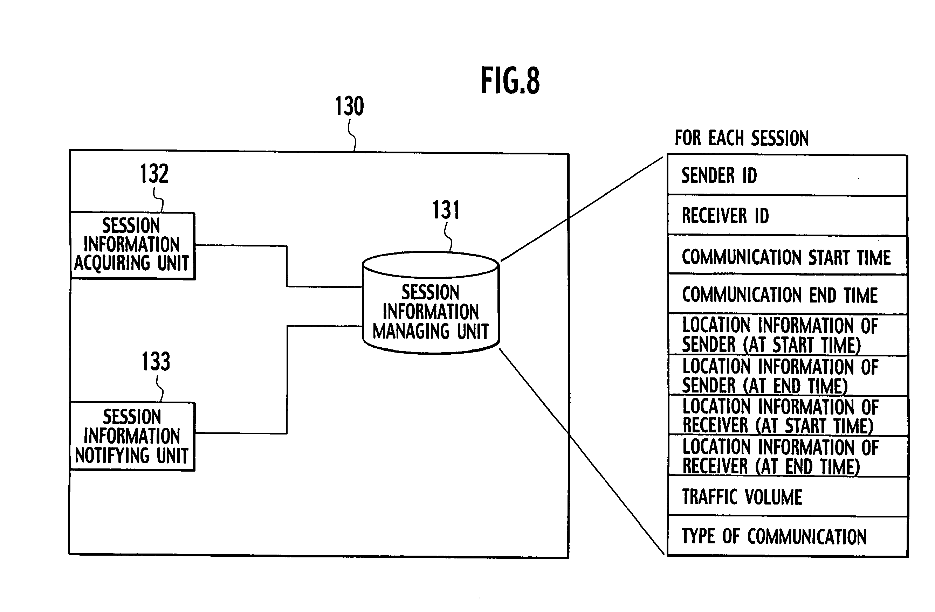

Referring to FIG. 8, a configuration of the session control node 130 will be described. The session control node 130 is configured to control and monitor the communication (a session) performed by each user terminal 90.

For example, the session control node 130 applies to a part of a function of an authentication server performing a user authentication, a part of a function of an accounting server performing accounting processing, and a part of a function of an exchange, the SIP server or the HLR, which performs call processing.

As shown in FIG. 8, the session control node 130 includes a session information managing unit 131, a session information acquiring unit 132, and a session information notifying unit 133.

The session information managing unit 131 is configured to manage a communication history of the communication (each session) performed by each user terminal 90.

For example, the session information managing unit 131 is configured to manage session information (the communication history) including a "sender ID", a "receiver ID", a "communication start time", a "communication end time", "location information of a sender (at the start time)" "location information of the sender (at the end time)", "location information of a receiver (at the start time)", "location information of the receiver (at the end time)", "traffic volume", and a "type of communication".

The session information acquiring unit 132 is configured to create the communication history (the session information) of a communication performed by the user terminal 90, and to accumulate the communication history in the session information managing unit 131, when the communication ends.

The session information notifying unit 133 is configured to notify the session information in the session information managing unit 131, to the user communication tendency database 140.

For example, the session information notifying unit 133 may be configured to notify the session information periodically, to notify the session information when the communication (the session) performed by the user terminal 90 ends, or to notify the session information in response to a request from the user communication tendency database 140.

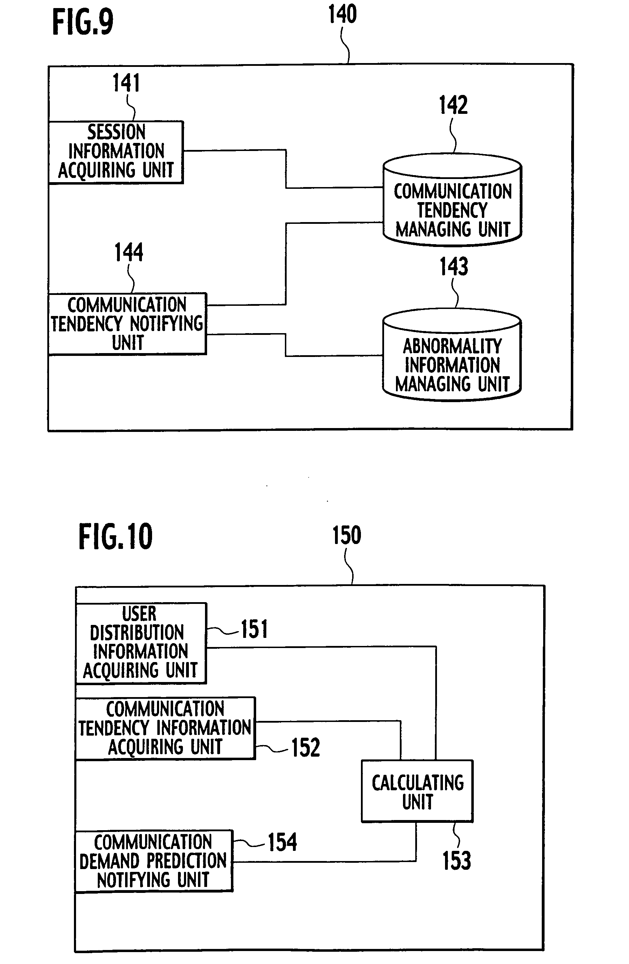

Referring to FIG. 9, a configuration of the user communication tendency database 140 will be described. The user communication tendency database 140 is a database configured to learn a characteristic and tendency of the communication of the user terminal 90 in each service area, based on the session information acquired from the session control node 130.

As shown in FIG. 9, the user communication tendency database 140 includes a session information acquiring unit 141, a communication tendency managing unit 142, an abnormality information managing unit 143, and a communication tendency notifying unit 144.

The session information acquiring unit 141 is configured to acquire the session information of the user terminal 90 for each service area, by transmitting a request for the session information to the session control node 130 at predetermined timing.

The communication tendency managing unit 142 is configured to create and manage communication tendency information indicating the characteristic and tendency of the communication of the user terminal 90 for each service area, based on the session information of the user terminal 90 for each service area, which is acquired by the session information acquiring unit 141.

For example, the communication tendency managing unit 142 may directly accumulate the above-described acquired session information as the communication tendency information.

The communication tendency managing unit 142 may accumulate, as the communication tendency information, a parameter indicating a specific communication model to which the session information applies, in consideration of the characteristic and tendency of the communication which relate to the above-described acquired session information.

When an amount of the session information is enormous, use of the latter method makes it possible to achieve a compression of the information.

The abnormality information managing unit 143 is configured to manage abnormality information such as regional abnormality information and temporal abnormality information. Such abnormality information is entered by an operator and the like.

The regional abnormality information is information suggesting an occurrence of a special traffic status in a specific area. For example, the regional abnormality information suggests that a possibility of the occurrence of the special traffic status in the specific area is high owing to a regional event such as a festival, a firework display and a disaster.

Moreover, the temporal abnormality information is information suggesting an occurrence of a special traffic status for a specific time. For example, the temporal abnormality information suggests that a possibility of the occurrence of the special traffic status for the specific time is high owing to a temporal event such as a sale start of tickets of a highly popular event and the New Year's Day.

The communication tendency notifying unit 144 is configured to notify the communication tendency information in the communication tendency managing unit 142, to the network load prediction node 150.

For example, the communication tendency notifying unit 144 may be configured to notify the communication tendency information periodically, or to notify the communication tendency information in response to a request from the network load prediction node 150.

Referring to FIG. 10, a configuration of the network load prediction node 150 will be described. The network load prediction node 150 is configured to acquire the user information (user distribution information) of the user terminal located in each service area and the communication history (the session information) of each user terminal at predetermined timing, and to calculate the communication demand prediction in each service area based on the user information and the communication history (the session information).

As shown in FIG. 10, the network load prediction node 150 includes a user distribution information acquiring unit 151, a communication tendency acquiring unit 152, a calculating unit 153, and a communication demand prediction notifying unit 154.

The user distribution information acquiring unit 151 is configured to acquire the user information (user distribution information) of the user terminal located in each service area from the user distribution database 120, by transmitting a request for the user distribution information at predetermined timing.

The user distribution information acquiring unit 151 may be configured to acquire the user distribution information periodically, to acquire the user distribution information in response to an instruction from the operator, or to acquire the user distribution information based on a request for prediction from the network configuration management node 10.

The communication tendency acquiring unit 152 is configured to acquire the communication tendency information indicating the characteristic and tendency of the communication of the user terminal 90 for each service area from the user communication tendency database 140, by transmitting a request for the communication tendency at predetermined timing.

The communication tendency acquiring unit 152 may be configured to acquire the communication tendency information periodically, to acquire the communication tendency information in response to an instruction from the operator, or to acquire the communication tendency information based on the request for prediction from the network configuration management node 10.

The calculating unit 153 is configured to calculate the communication demand prediction in each service area, based on the received user distribution information and communication tendency information.

Specifically, the calculating unit 153 is configured to analyze the characteristic and tendency of the communication of the user terminal 90 located in each service area by use of a mathematical aggregate compilation method.

As the result, the calculating unit 153 is configured to statistically calculate traffic volume (am amount of packet data, a communication band and the like) of communications transmitted from a specific service area to a specific service area and a communication throughput required for the communication in each service area (the number of service provisions, and the like), as the communication demand prediction.

For example, the calculating unit 153 may be configured to associate the user information, the communication tendency information and the communication demand prediction with each other, by use of a predetermined method, and to output the communication demand prediction associated with the received user information and communication tendency information.

In addition, the calculating unit 153 may be configured to calculate the communication demand prediction, based on user attribute information in addition to the above-mentioned user distribution information and communication tendency information.

The calculating unit 153 may be configured to calculate the communication demand prediction showing that traffic volume in a specific service area temporally increases, instead of concrete traffic volume and so on.

The communication demand prediction notifying unit 154 is configured to notify the communication demand prediction calculated by the calculating unit 153, to the network configuration management node 10.

The communication demand prediction notifying unit 154 may be configured to notify the communication demand prediction periodically, to notify the communication demand prediction in response to an instruction from the operator, or to notify the communication demand prediction based on a request for the prediction from the network configuration management node 10.

### (Operation of Communication System According to One Embodiment of the Present Invention)

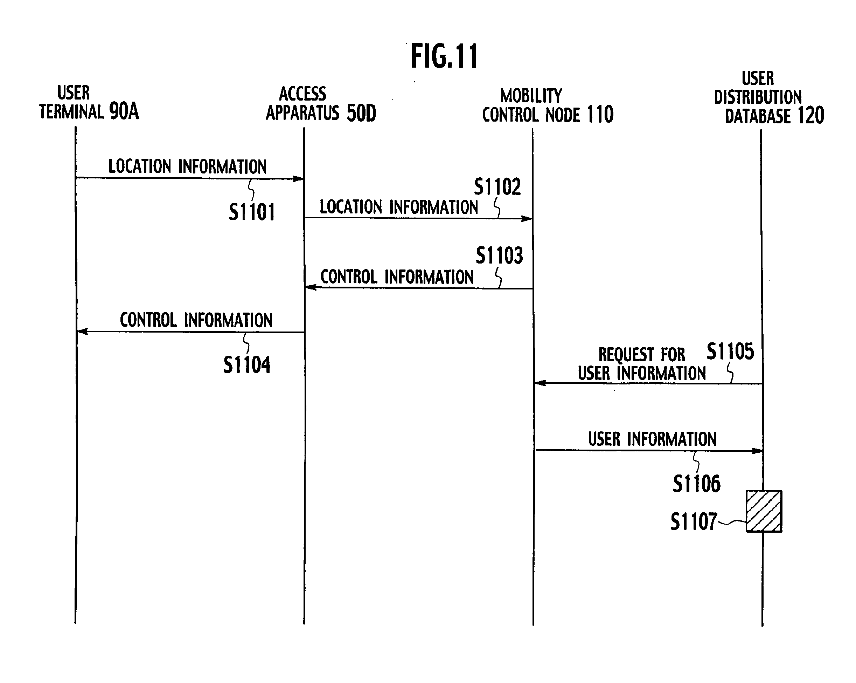

Referring to FIGS. 11 to 13, operations of the communication system according to this embodiment will be described.

First, referring to FIG. 11, operations of updating the user distribution database 120 in the communication system according to this embodiment will be described.

In Step 1101, for the purpose of determining a calling area or continuing the communication, the user terminal 90A continuously notifies the location information to the access apparatus 50D which manages the service area where the user terminal 90A is located.

For example, the user terminal 90A which is a cellular phone is configured to notify the location information to the access apparatus 50D when the calling area is changed owing to a movement of the user terminal 90A, when the user terminal 90A is turned on, or the like.

The user terminal 90A which is a mobile IP terminal is configured to notify the location information to the access apparatus 50D when a network domain is changed owing to the movement of the user terminal 90A, when the location information is required from the mobility control node (HA) 110, or the like.

In Step 1102, the access apparatus 50D transmits the received location information to the mobility control node 110. The mobility control node 110 updates the user information for each service area in the user information managing unit 111 in response to the received location information.

In Step 1103 and Step 1104, the mobility control node 110 controls the communication of the user terminal 90A through the access apparatus 50D.

In Step S1105, the user distribution database 120 transmits the request for the user information to the mobility control node 110 at predetermined timing.

In Step S1106, the mobility control node 110 notifies the user information in the user information managing unit 111, to the user distribution database 120 in response to the request for the user information.

In Step 1107, the user distribution database 120 updates the user distribution information in the user distribution managing unit 121 based on the received user information.

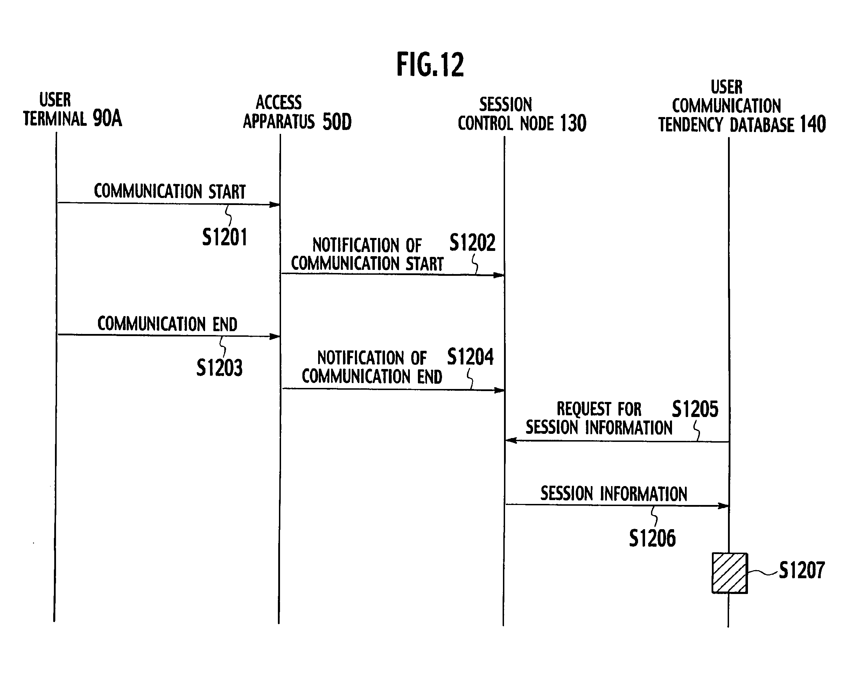

Second, referring to FIG. 12, operations of updating the user communication tendency database in the communication system according to this embodiment will be described.

When detecting a start of the communication by the user terminal 90A in Step 1201, the access apparatus 50D notifies the fact to the session control node 130 in Step 1202.

Then, when detecting an end of the communication by the user terminal 90A in Step 1203, the access apparatus 50D notifies the fact to the session control node 130 in Step 1204. In response to such a notice, the session control node 130 creates and accumulates a communication history of the communication (the session) in the session information managing unit 131.

In Step 1205, the user communication tendency database 140 transmits the request for the session information to the session control node 130 at predetermined timing.

In Step 1206, the session control node 130 notifies the session information in the session information managing unit 131 to the user communication tendency database 140, in response to the request for the session information.

In Step S1207, the user communication tendency database 140 updates the communication tendency information in the communication tendency managing unit 142 based on the received session information.

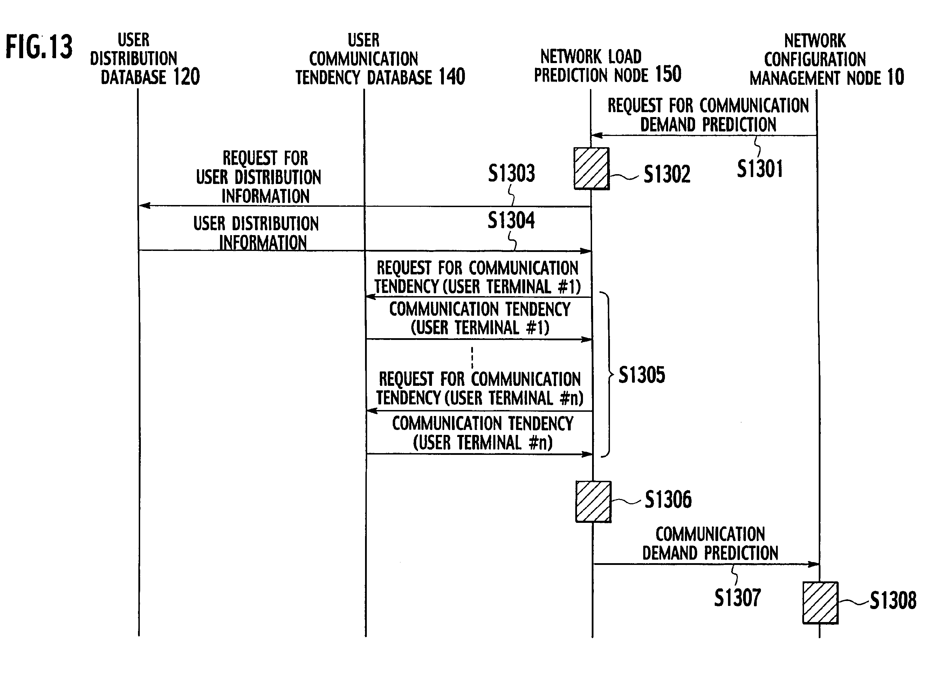

Third, referring to FIG. 13, operations of changing the logical path in the communication system according to this embodiment will be described.

In Step 1301, the network configuration management node 10 transmits the request for the communication demand prediction to the network load prediction node 150 at predetermined timing.

In Step 1302, the adaptive controlling unit 14 of the network load prediction node 150 activates the scenario for the adaptive control in response to the received request for the communication demand prediction.

In Step 1303, the user distribution information acquiring unit 151 of the network load prediction node 150 transmits the request for the user distribution information, to the user distribution database 120.

In Step 1304, the user distribution database 120 transmits the user information (user distribution information) for each service area in the user distribution information managing unit 121 to the network load prediction node 150 in response to the received request for the user distribution information.

In Step 1305, the communication tendency acquiring unit 152 of the network load prediction node 150 transmits the request for the communication tendency to the user communication tendency database 140, and the user communication tendency database 140 transmits the communication tendency for each user terminal 90 in the communication tendency managing unit 142 to the network load prediction node 150 in response to the received request for the communication tendency. Here, Step 1305 is repeated by the number of user terminals 90.

In Step 1306, the calculating unit 153 of the network load prediction node 150 calculates the communication demand prediction relating to the traffic volume among the respective service areas and the communication throughput in each service area, based on the user distribution information (the number of user terminals located in each service area, and the like) for each service area and the communication tendency information of each user terminal 90.

In Step 1307, the communication demand prediction notifying unit 154 of the network load prediction node 150 notifies the calculated communication demand prediction to the network configuration management node 10.

In Step 1308, the adaptive controlling unit 14 of the network configuration management node 10 controls the configuration of the logical paths among the respective nodes and the functional layout of the respective service control apparatuses and the respective access apparatuses 50, based on the current network configuration and the received communication demand prediction.

### (Function/Effect of Communication System According to One Embodiment of the Present Invention)

In accordance with the communication system according to this embodiment, the communication demand prediction in each service area is calculated based on the user information of the user terminal located in each service area and the communication history of the communication performed by each user terminal, which are acquired at the predetermined timing. Accordingly, highly accurate demand prediction of the network facility can be calculated efficiently.

Moreover, in accordance with the communication system according to this embodiment, the logical path between each access apparatus and each service control node is controlled based on the communication demand prediction calculated in the above-described manner. Accordingly, the utilization efficiency of the network facility can be enhanced.

Furthermore, in accordance with the communication system according to this embodiment, not only the user information of the user terminal in the communication state but also the user information of the user terminal in the non-communication state is managed. Accordingly, a more highly accurate demand prediction of the network facility can be calculated.

Moreover, in accordance with the communication system according to this embodiment, the demand prediction of the network facility can be automatically calculated. Accordingly, this leads to a compression of labor cost. Moreover, an extra network facility which may result from poor accuracy of the demand prediction can be reduced.

Furthermore, in accordance with the communication system according to this embodiment, the number of regulation controls which may occur owing to congestion and the like, is expected to be reduced. Accordingly, it is made possible to improve a communication enabled rate, and the user can obtain a merit of receiving a high-quality service.

As described above, according to the present invention, there can be provided the communication system and the communication method, which are capable of increasing the utilization efficiency of the network facility by efficiently calculating the highly accurate prediction of the demand for the network facility, and provided the network load prediction node and the network configuration management node, which are suitable for use in these communication system and method.

Additional advantages and modifications will readily occur to those skilled in the art. Therefore, the invention in its broader aspects is not limited to the specific details and the representative embodiment shown and described herein. Accordingly, various modifications may be made without departing from the scope of the general inventive concept as defined by the appended claims and their equivalents.

## Claims

1. A communication system in which a plurality of user terminals located in a plurality of service areas perform communications, the communication system comprising:
a mobility control node configured to manage a service area where each user terminal is located;
a session control node configured to manage a communication history of a communication performed by each user terminal; and
a network load prediction node configured to acquire user information of the user terminal located in each service area and the communication history of each user terminal at predetermined timing, and to calculate a communication demand prediction in each service area based on the user information and the communication history.

2. The communication system according to claim 1, further comprising:
a network configuration management node configured to control a logical path between an access apparatus and a service control node based on the communication demand prediction acquired from the network load prediction node, the access apparatus being capable of communicating with a user terminal in a predetermined service area, and the service control node providing a predetermined service to the user terminal through the access apparatus.

3. The communication system according to claim 1, further comprising:
a user distribution database configured to manage user information of a user terminal in a communication state and user information of a user terminal in a non-communication state for each service area based on management information in the mobility control node, and
wherein the network load prediction node is configured to acquire the user information of the user terminal located in each service area from the user distribution database at predetermined timing.

4. A network load prediction node for use in a communication system in which a plurality of user terminals located in a plurality of service areas perform communications, the network load prediction node comprising:
an acquirer configured to acquire user information of the user terminal located in each service area and a communication history of a communication performed by each user terminal at predetermined timing; and
a calculator configured to calculate a communication demand prediction in each service area based on the user information and the communication history.

5. A network configuration management node for use in a communication system in which a plurality of user terminals located in a plurality of service areas perform communications, the network load prediction node comprising:
a controller configured to control a logical path between an access apparatus and a service control node based on a communication demand prediction calculated based on user information of a user terminal located in each service area and a communication history of a communication performed by each user terminal, the access apparatus being capable of communicating with a user terminal in a predetermined service area, and the service control node providing a predetermined service to the user terminal through the access apparatus.

6. A communication method in which a plurality of user terminals located in a plurality of service areas perform communications, the communication method comprising:
managing, in a mobility control node, a service area where each user terminal is located;
managing, in a session control node, a communication history of a communication performed by each user terminal;
acquiring, in a network load prediction node, user information of the user terminal located in each service area and the communication history of each user terminal at predetermined timing; and
calculating, in the network load prediction node, a communication demand prediction in each service area based on the user information and the communication history.
